# EUROPEAN PATENT SPECIFICATION

(11) **EP 1 222 020 B1**
(45) Date of publication and mention of the grant of the patent: **16.06.2004**
(21) Application number: 00971933.7
(22) Date of filing: 10.10.2000
(51) Int. Cl.: B01J 2/06, B22F 9/08

(54) **METHOD RELATING TO GRANULATION AND APPARATUS THEREFOR**
VERFAHREN UND VORRICHTUNG ZUM GRANULIEREN
PROCEDE DE GRANULATION ET DISPOSITIF ASSOCIE

(30) Priority: 15.10.1999 SE 9903710
(43) Date of publication of application: 17.07.2002
(73) Proprietor: Avestapolarit Aktiebolag (publ), 103 27 Stockholm (SE)
(72) Inventor: SAMUELSSON, Peter, S-693 32 Degerfors (SE); ANDERSSON, Jan, S-302 44 Halmstad (SE)
(74) Representative: Hynell, Magnus
(86) International application number: PCT/SE2000/001953
(87) International publication number: WO 2001/026794

(56) References cited:
- WO-A1-93/14877
- US-A- 4 191 516
- US-A- 5 846 349
- DATABASE WPI Week 199148, Derwent Publications Ltd., London, GB; AN 1991-349237, XP002905278 & JP 3 232 909 A (DAIDO TOKUSHUKO KK) 16 October 1991 & PATENT ABSTRACTS OF JAPAN & JP (PAJ)
- DATABASE WPI Week 198032, Derwent Publications Ltd., London, GB; AN 1980-55795C, XP002905279 & JP 55 082 702 A (TOYOTA JIDOSHA KK) 21 June 1980 & PATENT ABSTRACTS OF JAPAN & JP 55 082 702 A

## Description

### TECHNICAL FIELD

The invention relates to a method for granulation of a molten material consisting of liquid slag, liquid metal or a mixture thereof. The invention particularly concerns a method for granulating a molten material which substantially consists of liquid slag, but which also contains a minor amount of liquid, valuable metal, which one wishes to recover. The invention also concerns an apparatus for carrying out the granulation.

### BACKGROUND OF THE INVENTION

Many methods and apparatuses have been suggested for granulation of molten materials. Most of these methods and apparatuses are based on a stream of a molten material being disintegrated by impact to droplets, which are cooled so that a granulate or in certain cases a powder is obtained. According to one principle, the stream of molten material is disintegrated by impact by gas or water jets which are directed against the stream of molten material. This principle is today widely employed in well operating equipments for the manufacture of metal powder. To some extent, the same principle is also used for granulation of slag. However, as far as is known to the applicant, there do not exist any well operating equipments for granulation of liquid slag, the flow, temperature, chemistry and consistency of which greatly vary, and particularly not for granulation of liquid slags which also contain significant and varying contents of liquid metal, i.e. slags from steel works in which stainless steels are manufactured. Therefore, there is a long felt need for improvements within this field for solving important problems of environmental as well as of economic kind. The handling of slag from metallurgical production plants, such as steel works, ferro-alloy works etc, namely is a kind of work which can cause environmental damages because of the tendency of solidified and often decomposing slag to produce a lot of dust. This is particularly serious if the slag contains substances which are harmful to the environment. If the slag also contains a valuable metal, it is of course desirable to recover that metal, which today is carried out in special, central recovering plants. The handling is troublesome, must comply with environmental protection regulations, which involves complications, is usually costly, and often requires long transports.

JP-A-3 232 909 describes a technique for formation of metal powder, comprising the formation of a stream of molten material in the shape of a curtain that is at least five times as wide as it is thick, and comprising the directing of a fluid of gas, water, oil etc. to one short side of the thin stream of molten material (thin plate-like stream) in order to fragment the stream of molten material into a metal fine powder.

### BRIEF DISCLOSURE OF THE INVENTION

It is against the above background a purpose of the invention to provide a well functioning method and equipment suitable for the method for granulating a molten material. The invention has first of all been developed for granulation of slag, which is produced in connection with the manufacture of stainless steels, which slag contains a certain amount, e.g. 5-20 weight-%, of a valuable metal, which accompanies the slag from the manufacture of stainless steel, but it is the applicant's opinion that the method and the equipment can be used also for granulation of other slags with or without metal content, such as blast furnace slag, other types of steel work slags than slags from the manufacture of stainless steels, slags from the manufacture of ferro-alloys with or without contents of an accompanying metal, and probably also for molten materials which substantially or completely consist of liquid metal, such as raw iron, steel, and ferro-alloys.

Preferably, a stream of the molten material is established, said stream being caused to have the shape of a curtain, which is caused to fall downwards by the gravitation, said curtain being comparatively thin but on the other hand pronouncedly wide, said stream of molten material being disintegrated, i.e. is fragmented, through impact by water jets which are directed against at least one broadside of said curtain along essentially the entire width of the curtain, as the stream of molten material is falling downwards, and wherein the formed fragments, which may have the shape of larger or more tiny drops or sprays, are rapidly cooled by the same or other water jets, causing said drops or spray to be rapidly cooled and to solidify to form granules.

It is crucial that the slag is cooled very quickly for the provision of a granulate which does not decompose, which it might do, if it is cooled slowly. At least this is true as far as steel work slags having high contents of lime are concerned, but may be true also for other types of slag, the chemical composition of which may cause a risk of decomposing. For the provision of a quick cooling it is advantageous if the curtain is thin. It is also desirable that the water jets have enough capacity to penetrate the curtain, so that water will not land under metal existing in the slag and which possibly has not solidified. Also for that reason, the curtain should be comparatively thin and have a mean thickness of max. 10 cm. On the other hand, it must not be too thin. Too thin a curtain makes it more difficult to maintain a comparatively even thickness, and hence a reproducibility of the process. The mean thickness should therefore be at least 2 cm. The width should be at least five times as large as the thickness of the curtain. Generally speaking, it is favourable the wider the curtain is up to a certain practical limit in order to provide on one hand a desirable production capacity, and on the other hand to reduce possible edge effects, i.e. possible problems in connection with the fragmentation of the liquid material in the region of the outer edges of the curtain. Preferably, the width of the curtain therefore should be at least 50 cm, suitably at least 80 cm, but it might even be 1 m or larger. Probably, however, it should not exceed 2 m and normally not be more than 150 cm wide.

Liquid slag and liquid metal, at least liquid steel, contain approximately equal amounts of heat per mass unit, but the density of the slag is lower than that of the metal. Slag therefore is more readily cooled to solidifying temperature. Other parameters which may have an influence on the result of the granulation are viscosity and surface tension conditions of the molten, liquid material. According to one aspect of the invention, this can be utilized when the molten material consists of a mixture of liquid slag and liquid metal, namely for the provision of the granulation in a mode which facilitates a subsequent separation of the valuable metal from the less valuable slag. According to this aspect or development of the invention, there is provided a stream of the mixture of molten materials, water being sprayed against the stream of the liquid mixture of molten materials in such an amount and with such a force that the mixture is disintegrated by impact, i.e. is fragmented, to form drops or fragments of varying sizes, which drops or fragments are rapidly cooled to form a granulate consisting of a coarse fraction which contains the main part of the valuable metal and a finer fraction which contains the main part of the slag of the initial mixture, which facilitates a subsequent separation process. Further, it is particularly advantageous from a recovery point of view, that the main part of the metal content is collected in the coarse fraction, since larger particles can be recirculated in the steel manufacturing process and be re-melted with smaller losses of material than in the case of a finer material.

For the granulation there can be employed an apparatus which comprises means for establishing a stream of the molten material in the form of a curtain according to the foregoing, which preferably is at least 50 cm wide but essentially thinner, preferably having a mean thickness of 2-10 cm, a battery of nozzles arranged in the lateral direction along the entire width of the curtain and also along at least a distance along the flow direction of the curtain, and means for spraying water under pressure through said nozzles in a direction against the curtain, so that it will disintegrate the stream of molten material to form droplets and/or larger fragments and cool said droplets and/or fragments.

Said means for establishing a stream of molten material in the form of a curtain according to the embodiment consists of an inclined chute, which has a flat bottom with the same breadth as the desired width of the curtain. Said means also includes equipment for conveying the molten material and for pouring it into the upper end of the chute. Said equipment may consist of a supply chute or of other conventional transport and tipping devices and a vessel for the molten material but can also consist of specially designed devices. In principle, a bottom pour tundish with a straight, slot-shaped pouring opening in the bottom of the tundish can be used instead of a pouring chute having a flat bottom, but such a device is not as suitable as an open, inclined pouring chute because of the risk of pluggings in the slot shaped pouring hole. The technique of spreading out the liquid material on a wide, inclined surface ensures a high capacity and reliability in operation, also when it is the question of a material which can vary considerably as far as flow, temperature, consistence and chemical composition are concerned.

The nozzles can consist of separate units, which are connected to one or several water supply pipes but are preferably integrated in one or several spray-heads, which in their turn are connected to a source of water under pressure. According to an embodiment which has turned out to function very well, the spray-head consists of a box having a wall facing said curtain, said wall being perforated so that it has a great number of outlets. More particularly, the outlets according to the employed embodiment consists of circular apertures, which may have a diameter of 10 to 30 mm and may be arranged in horizontal rows, as well as in rows which are perpendicular to the horizontal rows, i.e. coincide with vertical planes, along the whole width (lateral extension) and height of the spray-head. It is particularly advantageous, when the molten material contains liquid metal, to provide the apertures of at least un upper portion of the spray-head at such a distance from each other in those rows which coincide with vertical planes that the liquid material in metaphoric terms is "slit", so that major strip-shaped units are formed, by the water that is sprayed through the nozzles. The same water also effectuates an initial cooling action, which is completed by the water which is discharged through the apertures of the lower portion of the spray-head. The intense cooling caused by the water spraying also breaks apart said units to form smaller particles, which is possible especially as far as the slag is concerned, which further promotes the achievement of a granulate consisting of larger metal particles and essentially smaller slag particles. A suitable pitch between the "vertical" rows in the upper part of the spray-head is 20 to 70 mm. According to another conceivable embodiment, those apertures which form said nozzles have the shape of narrow slots in that wall of the spray-head which faces the curtain. Suitably these slots are provided in vertical planes, wherein the purpose also in this case is that that water which is sprayed out through the slots, particularly through an upper row of slots in the case when the spray-head is provided with a battery of rows of slots, shall "slit" the curtain/stream of molten material, and particularly the liquid metal which may be included in the molten material for establishing major units.

As has been mentioned in the foregoing, the water should pass through the curtain of molten material in order to avoid any explosion risk, which could be caused of molten material on top of water. This is one of the reasons why the curtain of molten material should have a thickness of 2 to 10 cm. On the other hand, the water should have a desirable time of contact with the molten material in order to have sufficient time for cooling it during its passage through the curtain. Therefore, it is suitable to spray the water obliquely downwards against the rear side of the curtain of molten material. The angle between the curtain of molten material and the water jets thus should be less than 90°, e.g. 20 to 60°. An angle of about 35° has turned out to function very well.

Said means for spraying water under pressure through the nozzles comprises pumps and water pipes to the nozzles or to said spray-head or spray-box, respectively, in the case when the nozzles are integrated in such a larger unit. The water serves to disintegrate the stream of molten material by impact and also to cool the major or minor drops and/or fragments which are formed, particularly as water from the upper part of said battery of nozzles hits the curtain-shaped stream of molten material, and to quickly cool the formed drops and/or fragments, so that they solidify before they land on a recipient which e.g. may consist of a lower, inclined chute, which is wider than the first mentioned, upper chute, and which conveys formed granules and water to a container or other collecting device. Also other devices for receiving granulate and water can be conceived instead of an inclined chute, e.g. a basin filled with water. For the achievement of the disintegration of the curtain/stream of molten material into drops or major splashes as well as for the cooling of said drops or splashes, there are required large amounts of water per time unit, which need to be sprayed through the nozzles, e.g. 50 to 500 l/s. The tlow of water is determined by the flow rate of the molten material, its chemistry, viscosity, and temperature. If the slag contains only very little molten metal, the supply of water may lie within the lower part of said range. However, the flow should be at least 100 l/s. If the metal content is comparatively large. which it frequently can be, at least during short periods of the granulation process, the amount of water should preferably be at least 200 l/s.

Also the provision of a plurality of batteries of nozzles on top of one another can be conceived, wherein at least any upper battery in the first place is used for the disintegration by impact of the curtain/stream of molten material and at least any battery located at a lower level in the first place is intended for cooling the formed drops or fragments. This also gives an opportunity to design the nozzles in different ways or to direct the spray-heads under different angles. For example at least any lower spray-head can be provided to spray the water in a more inclined angle against the curtain of molten material than at least any upper spray-head for the achievement of both said tasks. Also the opposite condition can be conceived too. Further, it is conceivable to design any lower spray-head, and/or to adjust the pressure in any lower spray-head, so that the water flow through said lower spray-head, and hence the cooling effect. will be larger than by means of any spray-head provided at an upper level.

Further characteristic features and aspects of the invention will be apparent from the accompanying patent claims and from the following detailed description of some conceivable embodiments and from the achieved results.

### BRIEF DESCRIPTION OF DRAWINGS

In the following detailed description of some embodiments and of achieved results, reference will be made to the accompanying drawings, of which
- Fig. 1: is a side elevation of an apparatus for carrying out the method of the invention,
- Fig. 2: is a front view along the line II-II of Fig. 1,
- Fig. 3: shows the front side of a spray-head according to a first embodiment, which can be included in the apparatus of the invention,
- Fig. 3A: is a chart which illustrates the distribution of water between the vertical rows of nozzles, which are included in the spray-head,
- Fig. 4: is a photograph which shows granulates of slag A, and of stainless steel B, respectively, produced by means of the devices according to Fig. 1 through Fig. 3,
- Fig. 5: shows another design of nozzles on the front side of the spray-head,
- Fig. 6: shows still another design of nozzles. and
- Fig. 7: shows an apparatus of the invention having a plurality of spray-heads provided on top of one another.

### DETAILED DESCRIPTION OF EMBODIMENTS AND ACHIEVED RESULTS

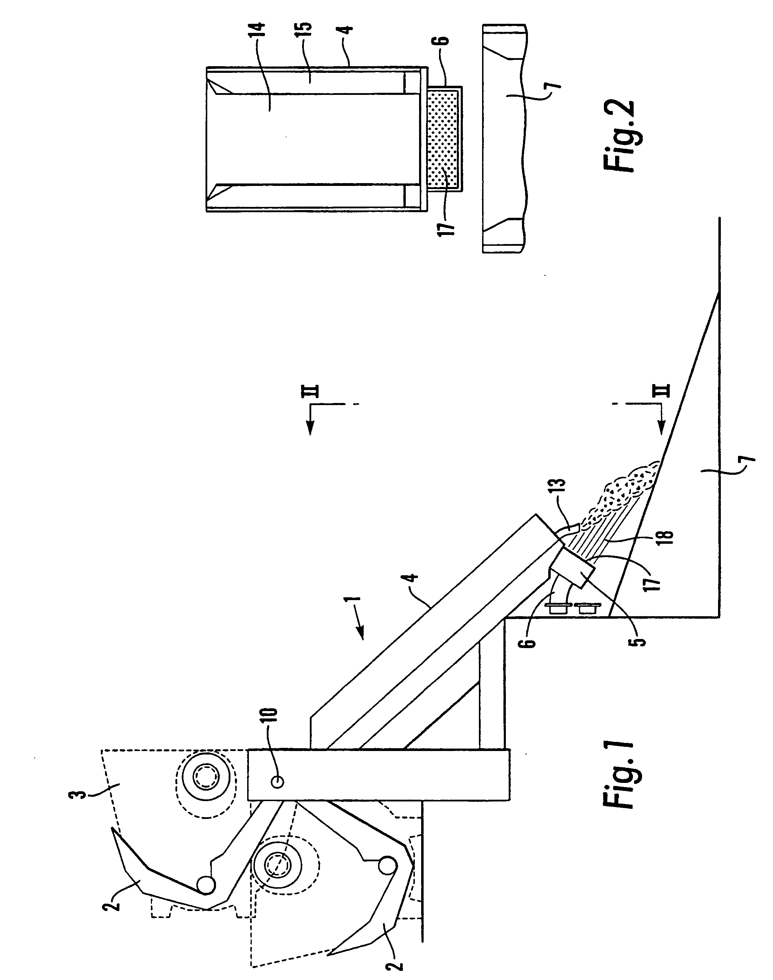

With reference first to Fig. 1 and Fig. 2. an apparatus for granulation according to the invention is generally denoted 1. The apparatus according to the embodiment consists of the following units, namely a tipping fork 2 (which is shown in a lower starting position and in an upper tipping position) for emptying liquid slag existing in a slag vessel 3, a chute-shaped, inclined slab 4, a spray-head 5, pumps, valves which are not shown in the drawing, at least a pipe 6 for the supply of water under pressure to the spray-head 5, and a lower slab 7, which also consists of an inclined chute, provided to receive the granulate and for conveying it for further processing.

The tipping fork 2 can be turned about a horizontal axis of rotation 10. Hydraulic cylinders can be employed for the tipping movement, but it is also possible to perform it by means of the forks of a transport truck or in some other way.

The slag vessel 3 consists of quite a conventional slag vessel of the type that is used in steel works for receiving slag which is skimmed from the surface of the decarburised steel. The size of the slag vessel naturally depends on the amount of slag which is normally produced in the steel furnace or steel converter. Normally, a slag vessel of this kind, when it is filled to the brim with slag and with a certain amount of liquid metal, accommodates for example 3 to 20 tons. In the plant, which has been used for the tests, the slag vessel accommodated 5 tons of molten slag, which contained a minor amount of liquid metal. If the content of metal in the slag is higher, which often occurs, the weight will be correspondingly higher, depending on the substantially higher density of the metal.

The chute 4 may have bottom and sides which are lined with a ceramic material, but suitably it consists of cast iron. The inclination is about 45°. Generally speaking, the inclination should be between 30 and 60°, suitably not more than 50°, in order to give the liquid material a suitable speed, before it leaves the lower edge 12 of the chute, said lower edge being completely straight, horizontal and sharp in order to promote a good relief of the stream of molten material and in order that the stream of molten material shall adopt the desired shape of a wide, falling curtain 13. The breadth of the bottom 14 of the chute, or at least the width of the lower relief edge 12, corresponds to the desired width of the falling curtain 13 of molten material. in the present example the width was 120 cm. The straight side walls of the chute are designated 15. The chute 4 shall, besides being a conveyor, also even the flow and distribute the molten material, so that the stream of molten material which pours over the relief edge 12 will have a substantially even thickness. The chute therefore should have not only an adequate width but also a sufficient length, e.g. a length which amounts to 2 to 4 times the width . of the chute.

The lower chute 7 can be designed approximately in the same mode as the upper chute 4 but can be made of a plainer material due to the efficient cooling by the water, e.g. of sheet or beams of a conventional steel. However, the lower chute is somewhat wider and its inclination should also be smaller, about 20 to 30°.

The flat front side 17 of the spray-head 5 is inclined about 35° relative to a vertical plane which coincides with the lower edge 12 of the chute 14 in order that the curtain of molten material shall get a longer distance of transport through the water, which in its turn provides a longer time of contact between water and molten material and thence a more efficient cooling action. Those water jets 18 which are ejected through the nozzle orifices 19 are thus parallel and directed obliquely forwards-downwards against the falling curtain 13 of molten material forming an angle of about 35° to the horizontal direction.

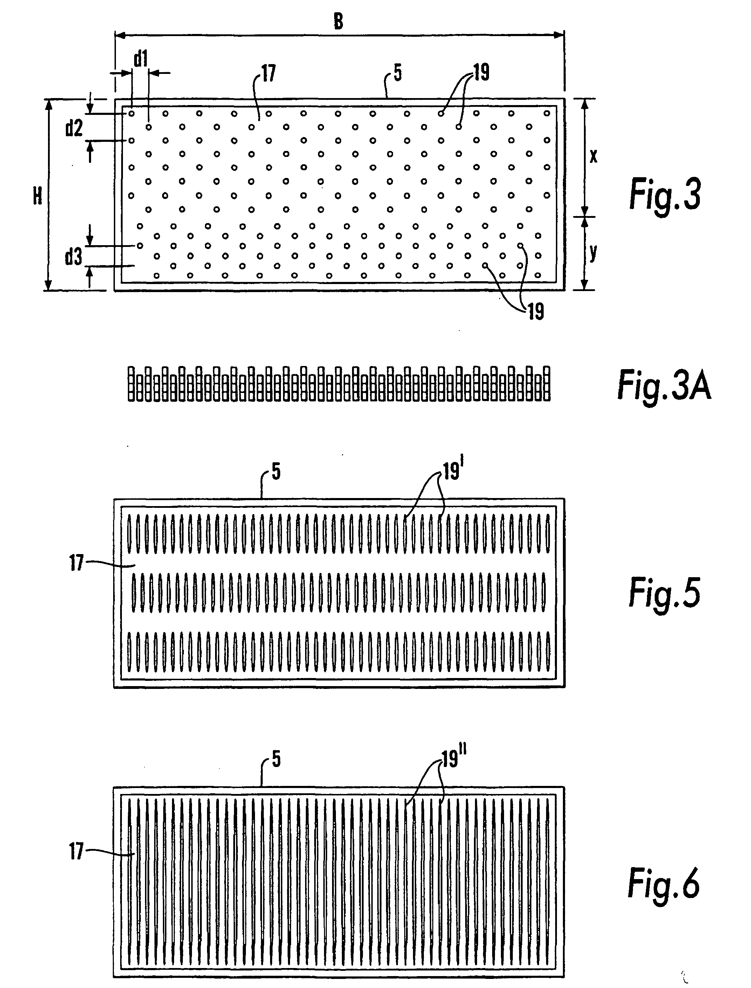

According to the embodiment shown in Fig. 3, the nozzles 19 simply consist of circular holes which are drilled at right angle into and through the front plate of the spray-head 5 and are provided with bevelled openings in order to counter-act diverging of the separate water jets. The pattern of nozzle openings is such that the nozzle openings form horizontal rows, at the same time as they also form rows coinciding with vertical planes which are perpendicular to the front 17 of the spray-head. The pitch d1 between the "vertical" rows is 50 mm in order that the water which is ejected through the openings 19 in the upper part **x** of the spray-head shall "slit" the molten material in comparatively wide strips. In the lower part y the "vertical" rows are displaced half a row pitch in order to intensify the cooling of the formed fragments of molten metal and slag and also for further disintegrating the slag particles. The distance d2 between nozzle openings included in the same "vertical" rows in the upper part **x** of the spray-head is 75 mm, while the corresponding distance d3 in the lower part **y** of the spray-head amounts to 60 mm. Besides, the horizontal rows of the nozzles in that part of the spray-head are more dense. The total number of holes of these lower rows is, however, smaller than in the upper part. This results in a water distribution between the "vertical" rows, as is illustrated in Fig. 3A. The diameters of the nozzles, according to the embodiment, amount to 16 mm, which for each nozzle corresponds to a cross-section area amounting to about 200 mm². The total number of nozzles of the spray-head 5, according to the embodiment, is 172, which gives a total passage area of about 3.5 dm².

The width B of the spray-head 5 was 120 cm, while the "height" H was 50 cm.

Slag which had been formed in connection with the manufacture of stainless steel was granulated by means of the described apparatus. A slag of that type substantially consists of lime, CaO, and other calcium compounds, SiO₂ and other metal oxides, as well as other metal compounds. which are formed during decarburisation and reduction of the molten steel. The slag also contained a minor portion, about 10 %, of liquid stainless steel, which accompanied the slag when the slag was removed from the converter in which the molten steel had been decarburised and the slag had been reduced. How this metal is distributed has not been completely investigated, but it is, however, common knowledge that at least part of the metal exists as metal drops in the liquid slag. Part of the liquid metal normally also settles in the slag vessel 3, in which it forms a bottom sump. When the molten material is tipped into the chute 4, also that part of the liquid metal is mixed with the slag. However, it can not be avoided that the mixing sometimes is very incomplete and that parts of the stream of molten material which pours down along the chute 4, as it is tipped into the chute, completely or substantially will consist of molten metal. It is of significant importance that also that part is efficiently split by the water jets 18 and cooled so that it solidifies. Otherwise there is an explosion risk. By means of the apparatus of the invention slag as well as metal is granulated very efficiently, also when the metal is present at a high concentration.

When the molten material is tipped into the chute 4, it spreads over the whole bottom 14 of the chute and forms a wide, about 2 to 10 cm thick curtain 13, as it leaves the lower edge 12 of the chute. Variations in thickness occur, which e.g. can depend on more or less occasional deposits of solidified slag and/or metal on the bottom 14 of the chute 4 and/or on its edge 12, or depend on variations in the flow from the slag vessel 3 as the slag vessel is tipped. In certain cases, this can cause the curtain within one or a few regions to be thicker than 10 cm, or thinner than 2 cm, or even cause the stream of molten material to separate into two or more curtains, which possibly, but not necessarily, unite to a continuous curtain before it is hit by the water jets. The mentioned thickness, 2 to 10 cm, therefore is a mean value of the thickness of the curtain or of the separate curtains.

During its fall, the curtain 13 is hit by the water jets 18, which with great force are sprayed against the rear side of the curtain under said angle. The water flow through the spray-head 5 amounted to about 200 l/s. The spray-head 5 was provided immediately beneath the lower edge 12 of the chute. so that the mean distance of transport of the water jets from the openings of the nozzles in the upper part x of the spray-head to the curtain 13 amounted to somewhat more than 10 mm. Therein there was achieved a considerable splitting and cooling as well as penetration of the curtain 13 by the jets from the upper rows of nozzles 19, while the splitting and cooling was completed to a desired degree by the jets from the lower rows of nozzles. Probably, the distance of transport of the water jets should not exceed 20 cm, but the most convenient length is probably 5 to 10 cm.

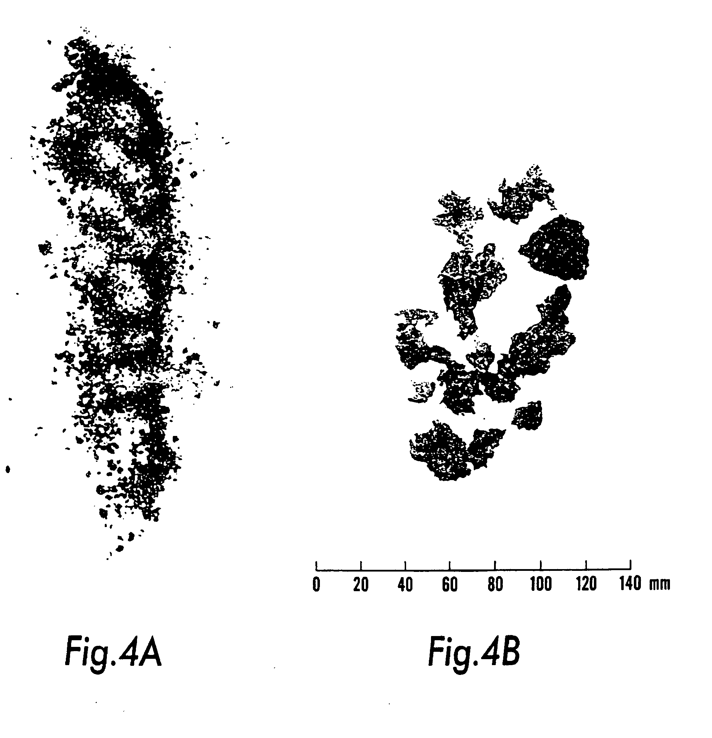

After the thus formed granulate has landed on the lower chute 7, it flows downwards-forwards and is collected in a suitable container, while the water is separated for reuse. The result is apparent from Fig. 4, in which the left hand picture A shows that fraction of the granulate which substantially consists of slag. Typically, this granulate has the shape of particles having a size from part of a millimetre up to max about 5 mm. Occasionally, some particles may be somewhat larger, max about 10 mm. That fraction of the granulate which substantially consists of metal has a completely different character, as is shown in the right hand picture B. That material consists of more irregularly shaped pieces, the main part of which, in terms of weight, has a size between 5 and up to about 40 mm. It is apparent that this to a great extent facilitates a separation of the valuable metal from the less valuable slag. This can, for example, be performed through conventional sieving. Also gravimetric and other techniques of separation, in which differences in density are effectively utilized are, however, also conceivable and may as a matter of fact be preferable, since a technique of that type can be employed also for the separation of smaller metal particles with a higher density from the lighter slag particles.

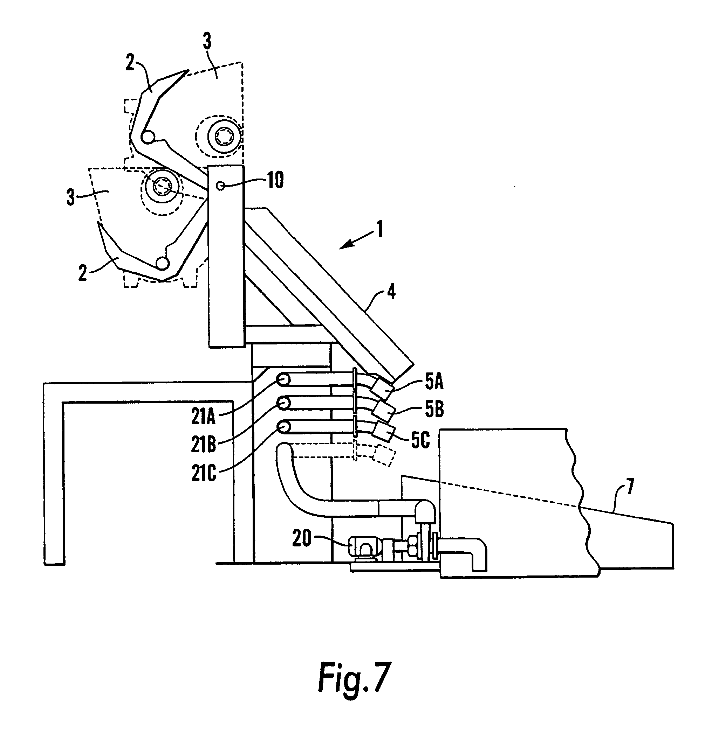

According to the design of the spray-head 5 according to Fig. 5, the nozzles 19' are designed as narrow, vertical slots. According to the embodiment, they are arranged in three parallel rows on top of one another. The nozzles of the central row are laterally displaced to lie midway between the nozzles of the upper and the lower rows of nozzles. The idea is that the water, which with force is ejected through in the first place the upper nozzle openings, shall "slit" the curtain 13 of molten material to form strips thereof, in the first place the liquid metal when that is present, so that major units are formed. The water thereafter fragments said units into pieces of suitable size.

In the embodiment according to Fig. 6. the principle of "slitting" the curtain to form strips is more radical. In this case the nozzles 19" extend in parallel planes from adjacent the top of the spray-head all the way to its bottom.

In the plant of Fig- 7 a plurality of spray-heads 5A, 5B, etc., is provided on top of one another, as is shown in the drawing. A separate pump 20 and a separate connection pipe 21A, 21B, 21C, etc. for water can be used for each spray-head 5A, 5B, 5C, etc. Suitably a design of the nozzles according to Figs. 5 or 6 for "slitting" the curtain 13 can be employed for the upper spray-head 5A, and in at least any of the subsequent spray-heads 5B, 5C, etc. there can be employed a design e.g. according to Fig. 3, so that the curtain 13 first is slit by the water jets from an upper spray-head, whereafter the splitting and cooling is completed by the water from the one or more subsequent spray-heads. The embodiment also makes it possible to employ water having different pressures, flows and temperatures and to give the spray-heads varying inclinations, as is shown in Fig. 7.

## Claims

1. A method for formation of solid particles from a molten material consisting of liquid slag, liquid metal or a mixture thereof, in which method a stream of molten material is established, said stream being caused to have the shape of a curtain (13), which is caused to fall downwards by the gravitation, said curtain being at least five times as wide as it is thick, which stream of molten material is disintegrated, i.e. is fragmented, by aid of at least one water jet (18) that is directed against said curtain as the stream of molten material is falling downwards, and causing the thus formed fragments to be rapidly cooled and to solidify to form said solid particles, **characterised** therein that a plurality of water jets (18) are directed against at least one broadside of said curtain along essentially the entire width of the curtain, and that the formed fragments which have the shape of larger or more tiny drops or spray, are rapidly cooled by the same or other water jets, causing said drops or spray to be rapidly cooled and solidify to form granules.

2. A method according to claim 1, **characterised** therein that the curtain has a mean thickness of 2 to 10 cm.

3. A method according to claims 1 or 2, **characterised** therein that the water jets are directed obliquely forwards-downwards against said curtain.

4. A method according to any of claims 1 to 3, **characterised** therein that the waterjets are sprayed forwards in parallel, vertical planes.

5. A method according to any of claims 1 to 4, **characterised** therein that the curtain has a width of at least 50 cm, preferably at least 80 cm, suitably at least 1 m, and that its width preferably is not more than 2 m, suitably not more than 1.5 m.

6. a method according to any of claims 1 to 5, **characterised** therein that the molten material is poured into a chute (4) having a straight, horizontal lower edge (12), wherein said curtain is formed having a width essentially corresponding to the length of said edge.

7. A method according to any of the preceding claims, wherein the molten material consists of a mixture of liquid slag and liquid metal, **characterised** therein that the curtain (13) consisting of said mixture of molten material is disintegrated by impact by said water jets (18) to form drops or fragments of varying size, which are rapidly cooled to form a granulate consisting of a coarse fraction (B), which contains the main part of the valuable metal, and a finer fraction (A), which contains the main part of the slag of the initial mixture.

8. An apparatus for formation of solid particles from of a molten material consisting of a liquid slag, a liquid metal or a mixture thereof, comprising means (4, 12) for establishing a stream of the molten material in the form of a curtain (13), which is at least five times as wide as it is thick, **characterised by** a battery (5) of nozzles (19) arranged in the lateral direction along the entire width of the curtain and also along a distance along the flow direction of the curtain, and means for spraying water under pressure through said nozzles in a direction against the curtain to disintegrate the stream of molten material by impact by water jets to form drops or fragments and to cool said drops or fragments to from said solid particles in the form of granules.

9. An apparatus according to claim 8, **characterised** therein that the water jets are directed against said curtain in vertical, parallel planes.

10. An apparatus according to any of claims 8 and 9, **characterised** therein that said curtain is shaped by the lower edge (12) of a pouring chute (4) for said molten material, said edge (12) lying in a vertical plane, which is perpendicular to those vertical planes in which said water jets are provided to be ejected in a direction against said curtain.

11. An apparatus according to claim 10, **characterised** therein that the chute (4) has a width corresponding to the desired width of said curtain, preferably at least 50 cm and preferably not more than 200 cm, suitably at least 80 cm, most conveniently at least 100 cm, and suitably 150 cm.

12. An apparatus according to claim 11, **characterised** therein that the chute is 2 to 4 times as long as it is wide.

13. An apparatus according to any of claims 8 to 12, **characterised** therein that said means for spraying water against the curtain comprises at least one battery (5) of nozzles. said battery having substantially the same extension in horizontal direction as the curtain is wide, preferably at least 50 cm, and preferably not more than 200 cm, suitably at least 80 cm, and most conveniently at least 100 cm, and suitably not more than 150 cm.

14. An apparatus according to claim 13, **characterised** therein that the battery has an extension of at least 20 cm, preferably at least 35 cm, and preferably not more than 100 cm, suitably not more than 70 cm in a direction perpendicular to the horizontal direction.

15. An apparatus according to any of claims 13 and 14, **characterised** therein that the nozzles are arranged in rows, which coincide with vertical, parallel planes, or consist of slots which are arranged in vertical, parallel planes, and that said rows and slots in vertical planes, respectively, have a pitch of 20 to 70 mm.

## Patentansprüche

1. Verfahren zum Formen oder Bilden von festen Partikeln aus einem geschmolzenen Material, das aus flüssiger Schlacke, flüssigem Metall oder einem Gemisch davon besteht, bei dem ein Strom geschmolzenen Materials hergestellt wird, wobei der Strom die Form eines Vorhanges (13) annimmt, der durch Schwerkraft nach unten fällt, und wobei der Vorhang mindestens fünfmal so breit wie dick ist, und wobei der Strom geschmolzenen Materials disintegriert, d.h. fragmentiert wird, mit Hilfe mindestens eines Wasserstrahls (18), der gegen den Vorhang gerichtet wird, während der Strom geschmolzenen Materials nach unten fällt, wodurch die so geformten Fragmente schnell abgekühlt werden und sich unter Bildung der festen Partikel verfestigen, **dadurch gekennzeichnet, dass** eine Vielzahl von Wasserstrahlen (18) gegen mindestens eine Breitseite des Vorhanges entlang im wesentlichen der gesamten Breite des Vorhanges gerichtet werden, und dass die gebildeten Fragmente, die die Form größerer oder kleinerer Tropfen oder Spritzer besitzen, schnell durch die gleichen oder andere Wasserstrahlen abgekühlt werden, wodurch die Tropfen oder Spritzer schnell abgekühlt werden und sich unter Bildung von Körnchen oder Granülen verfestigen.

2. Verfahren nach Anspruch 2, **dadurch gekennzeichnet, dass** der Vorhang eine durchschnittliche Dicke von 2 bis 10 cm besitzt.

3. Verfahren nach Ansprüchen 1 oder 2, **dadurch gekennzeichnet, dass** die Wasserstrahlen schräg vorwärts nach unten gerichtet gegen den Vorhang gerichtet werden,

4. Verfahren nach irgendeinem der Ansprüche 1 bis 3, **dadurch gekennzeichnet, dass** die Wasserstrahlen vorwärts in parallelen, vertikalen Ebenen gespritzt werden.

5. Verfahren nach irgendeinem der Ansprüche 1 bis 4, **dadurch gekennzeichnet, dass** der Vorhang eine Breite von mindestens 50 cm, vorteilhafterweise mindestens 80 cm, am geeigneten mindestens 1 m besitzt, und dass seine Breite vorteilhafterweise nicht mehr als 2 m, am geeigneten nicht mehr als 1,5 m, beträgt.

6. Verfahren nach irgendeinem der Ansprüche 1 bis 5, **dadurch gekennzeichnet, dass** das geschmolzene Material auf eine abschüssige Bahn gegossen wird, die eine gerade, horizontal verlaufende untere Kante (12) besitzt, wobei der Vorhang so ausgebildet wird, dass er eine Breite besitzt, die im wesentlichen der Länge der Kante entspricht.

7. Verfahren nach irgendeinem der vorstehenden Ansprüche, bei dem das geschmolzene Material aus einem Gemisch flüssiger Schlacke und flüssigem Metall besteht, **dadurch gekennzeichnet, dass** der Vorhang (13), der aus dem Gemisch geschmolzenen Materials besteht, disintegriert wird durch Einschlag der Wasserstrahlen (18) unter Ausbildung von Tropfen oder Fragmenten unterschiedlicher Größe, die unter Ausbildung eines Granulats schnell abgekühlt werden, das aus einer grobkörnigen Fraktion (B) besteht, die den Hauptteil des wertvollen Metalls enthält, und einer feinkörnigen Fraktion (A), die den Hauptteil der Schlacke des anfänglichen Gemisches enthält.

8. Vorrichtung zur Bildung von festen Partikeln aus einem geschmolzenen Material, das aus einer flüssigen Schlacke, einem flüssigen Metall oder einem Gemisch davon besteht, enthaltend Mittel (4,2) zum Herstellen eines Stroms geschmolzenen Materials in Form eines Vorhangs (13), der mindestens fünfmal so breit wie dick ist, **gekennzeichnet durch** eine Batterie (5) von Düsen (19), die in seitlicher Richtung entlang der gesamten Breite des Vorhangs und ebenfalls entlang einer Entfernung entlang der Strömungsrichtung des Vorhangs angeordnet sind, und Mittel zum Spritzen oder Sprühen unter Druck stehenden Wassers **durch** die Düsen in einer Richtung gegen den Vorhang, um den Strom geschmolzenen Materials **durch** Einschlag der Wasserstrahlen unter Ausbildung von Tropfen oder Fragmenten zu disintegrieren und Abkühlen der Tropfen oder Fragmente unter Ausbildung der festen Partikel in Form von Körnchen oder Granülen.

9. Vorrichtung nach Anspruch 8, **dadurch gekennzeichnet, dass** die Wasserstrahlen in senkrechten, parallelen Ebenen gegen den Vorhang gerichtet werden.

10. Vorrichtung nach irgendeinem der Ansprüche 8 und 9, **dadurch gekennzeichnet, dass** der Vorhang eine Form mit einer unteren Kante (12) einer abschüssigen Bahn (4) für das geschmolzene Material aufweist, wobei die Kante (12) in einer senkrechten Ebene liegt, die senkrecht zu den senkrechten Ebenen verläuft, in denen die Wasserstrahlen in einer Richtung gegen den Vorhang ausgestoßen werden.

11. Vorrichtung nach Anspruch 10, **dadurch gekennzeichnet, dass** die abschüssige Bahn (4) eine Breite besitzt, die der gewünschten Breite des Vorhangs entspricht, vorteilhafterweise mindestens 50 cm und vorteilhafterweise nicht mehr als 200 cm, geeigneter Weise mindestens 80 cm und am geeigneten mindestens 100 cm und geeignet 150 cm.

12. Vorrichtung nach Anspruch 11, **dadurch gekennzeichnet, dass** die abschüssige Bahn 2 bis 4 mal so lang wie breit ist.

13. Vorrichtung nach irgendeinem der Ansprüche 8 bis 12, **dadurch gekennzeichnet, dass** die Mittel zum Sprühen oder Spritzen des Wassers gegen den Vorhang mindestens eine Batterie (5) an Düsen umfasst, wobei die Batterie im wesentlichen die gleiche Erstreckung in horizontaler Richtung besitzt als der Vorhang breit ist, vorteilhafterweise mindestens 50 cm, und vorteilhafterweise nicht mehr als 200 cm, in geeigneter Weise mindestens 80 cm, und am geeigneten mindestens 100 cm, und in geeigneter Weise nicht mehr als 150 cm.

14. Vorrichtung nach Anspruch 13, **dadurch gekennzeichnet, dass** die Batterie eine Erstreckung von mindestens 20 cm besitzt, vorteilhafterweise mindestens 35 cm, und vorteilhafterweise nicht mehr als 100 cm, in geeigneter Weise nicht mehr als 70 cm einer Richtung senkrecht zur horizontalen Richtung.

15. Vorrichtung nach irgendeinem der Ansprüche 13 und 14, **dadurch gekennzeichnet, dass** die Düsen in Reihen angeordnet sind, die in senkrechten, parallelen Ebenen übereinstimmen oder aus Schlitzen bestehen, die in senkrechten, parallelen Ebenen angeordnet sind, und dass die Reihen bzw. Schlitze in senkrechten Ebenen eine Steigung von 20 bis 70 mm besitzen.

## Revendications

1. Procédé de formation de particules solides à partir d'un matériau fondu consistant en des scories liquides, un métal liquide ou un mélange de ceux-ci, procédé dans lequel est formée une coulée de matériau fondu, ladite coulée étant amenée à prendre la forme d'un rideau (13) tombant vers le bas par gravitation, ledit rideau étant au moins cinq fois plus large qu'épais, ladite coulée de matériau fondu étant désintégrée, c'est-à-dire fragmentée, au moyen d'au moins un jet d'eau (18) dirigé contre ledit rideau lorsque la coulée de matériau fondu tombe vers le bas, et provoquant le refroidissement rapide et la solidification des fragments ainsi formés pour former lesdites particules solides, **caractérisé en ce qu'**une pluralité de jets d'eau (18) sont dirigés contre au moins un flanc dudit rideau sensiblement le long de la largeur entière du rideau et **en ce que** les fragments formés, lesquels ont la forme de gouttes plus ou moins grandes ou d'un brouillard, sont rapidement refroidis par ce jet d'eau ou par d'autres jets d'eau, entraînant le refroidissement rapide et la solidification desdites gouttes ou brouillard pour former des granules.

2. Procédé selon la revendication 1, **caractérisé en ce que** le rideau a une épaisseur moyenne de 2 à 10 cm.

3. Procédé selon la revendication 1 ou 2, **caractérisé en ce que** les jets d'eau sont dirigés obliquement vers l'avant et vers le bas contre ledit rideau.

4. Procédé selon l'une quelconque des revendications 1 à 3, **caractérisé en ce que** les jets d'eau sont projetés vers l'avant dans des plans parallèles et verticaux.

5. Procédé selon l'une quelconque des revendications 1 à 4, **caractérisé en ce que** le rideau a une largeur d'au moins 50 cm, de préférence d'au moins 80 cm, de manière appropriée d'au moins 1 m et que sa largeur n'est de préférence pas supérieure à 2 m, de manière appropriée ne dépassant pas 1,5 m.

6. Procédé selon l'une quelconque des revendications 1 à 5, **caractérisé en ce que** le matériau fondu est coulé dans une goulotte (4) ayant un bord (12) inférieur horizontal droit, dans laquelle ledit rideau est formé avec une largeur correspondant sensiblement à la longueur dudit bord.

7. Procédé selon l'une quelconque des revendications précédentes, dans lequel le matériau fondu consiste en un mélange de scories liquides et de métal liquide, **caractérisé en ce que** le rideau (13) consistant en ledit mélange de matériau fondu est désintégré par l'impact desdits jets d'eau (18) pour former des gouttes ou fragments de taille variable, lesquels sont rapidement refroidis pour former un granulé consistant en une fraction grossière (B), contenant la majeure partie du métal de valeur et en une fraction plus fine (A) contenant la majeure partie des scories du mélange initial.

8. Appareil pour former des particules solides à partir d'un matériau fondu consistant en des scories liquides, un métal liquide ou un mélange de ceux-ci, comprenant des moyens (4, 12) pour réaliser une coulée de matériau fondu prenant la forme d'un rideau (13), lequel est au moins cinq fois plus large qu'épais, **caractérisé par** une batterie (5) de buses (19) agencées dans la direction latérale, le long de la largeur entière du rideau ainsi que sur une certaine distance le long de la direction de coulée du rideau, et des moyens pour projeter de l'eau sous pression à travers lesdites buses en direction du rideau pour désintégrer la coulée de matériau fondu du fait de l'impact des jets d'eau, pour former des gouttes ou fragments et pour refroidir lesdites gouttes ou fragments, afin de former lesdites particules solides sous la forme de granules.

9. Appareil selon la revendication 8, **caractérisé en ce que** les jets d'eau sont dirigés contre ledit rideau dans des plans verticaux et parallèles.

10. Appareil selon l'une quelconque des revendications 8 et 9, **caractérisé en ce que** ledit rideau est façonné par le bord inférieur (12) d'une goulotte de coulée (4) pour ledit matériau fondu, ledit bord (12) étant dans un plan vertical perpendiculaire aux plans verticaux dans lesquels les jets d'eau sont prévus en vue d'une éjection en direction dudit rideau.

11. Appareil selon la revendication 10, **caractérisé en ce que** la goulotte (4) a une largeur correspondant à la largeur souhaitée dudit rideau, de préférence d'au moins 50 cm et de préférence ne dépassant pas 200 cm, de manière appropriée d'au moins 80 cm, de la manière la plus adaptée entre toutes d'au moins 100 cm et de manière appropriée de 150 cm.

12. Appareil selon la revendication 11, **caractérisé en ce que** la goulotte est 2 à 4 fois plus longue que large.

13. Appareil selon l'une quelconque des revendications 8 à 12, **caractérisé en ce que** lesdits moyens pour projeter de l'eau contre le rideau comprennent au moins une batterie (5) de buses, ladite batterie s'étendant sensiblement dans la direction horizontale sur toute la largeur du rideau, de préférence sur au moins 50 cm et de préférence sur pas plus de 200 cm, de manière appropriée sur au moins 80 cm et de la manière la plus adaptée entre toutes sur au moins 100 cm, et de manière appropriée sur pas plus de 150 cm.

14. Appareil selon la revendication 13, **caractérisé en ce que** la batterie s'étend sur au moins 20 cm, de préférence sur au moins 35 cm et de préférence sur pas plus de 100 cm, de manière appropriée sur pas plus de 70 cm dans une direction perpendiculaire à la direction horizontale.

15. Appareil selon l'une quelconque des revendications 13 et 14, **caractérisé en ce que** les buses sont agencées en rangées qui coïncident avec les plans verticaux parallèles ou consistent en des fentes disposées dans des plans verticaux, parallèles et **en ce que** lesdites rangées et fentes disposées dans des plans verticaux ont respectivement un pas de 20 à 70 mm.
